(19) Europäisches Patentamt
European Patent Office
Office européen des brevets

(11) Veröffentlichungsnummer: **0 122 436**
**B1**

(12) # EUROPÄISCHE PATENTSCHRIFT

(45) Veröffentlichungstag der Patentschrift: **14.01.87**

(51) Int. Cl.⁴: **C 03 B 37/06**, D 01 D 5/12

(21) Anmeldenummer: **84102484.7**

(22) Anmeldetag: **08.03.84**

(54) **Verfahren und Vorrichtung zur Reduktion der Geschwindigkeit von strömenden Medien.**

(30) Priorität: **19.03.83 DE 3309989**

(43) Veröffentlichungstag der Anmeldung: **24.10.84 Patentblatt 84/43**

(45) Bekanntmachung des Hinweises auf die Patenterteilung: **14.01.87 Patentblatt 87/3**

(84) Benannte Vertragsstaaten: **AT BE CH DE FR GB IT LI NL SE**

(56) Entgegenhaltungen:
**EP-A-0 038 989**
**DE-B-1 131 853**
**DE-B-2 205 507**
**DE-C-803 925**
**US-A-4 060 355**
**US-A-4 316 731**

(73) Patentinhaber: **BAYER AG, Konzernverwaltung RP Patentabteilung, D-5090 Leverkusen 1 Bayerwerk (DE)**

(72) Erfinder: **Muschelknautz, Edgar, Prof. Dr., Carl-Rumpff- Strasse 33, D-5090 Leverkusen (DE)**
Erfinder: **Rink, Norbert, Dr., Frixheimerstrasse 60, D-4049 Rommerskirchen 1 (DE)**
Erfinder: **Chalupka, Georg, Dipl.- Ing., Carl-Leverkus- Strasse 1a, D-5068 Odenthal (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 122 436 B1

LIBER, STOCKHOLM 1987

**Beschreibung**

Die vorliegende Erfindung betrifft ein Verfahren und eine Vorrichtung zur Reduktion der Geschwindigkeit von strömenden Medien, insbesondere von Festkörperteilchen/ Gas-Dispersionen im Unterschalldiffusor. Der vorliegende Erfindungsgegenstand wurde speziell im Hinblick auf die Herstellung von Fasermatten aus Mineralwollfasern entwickelt. Bei der Herstellung von Mineralwolle erfolgt die Faserbildung im allgemeinen durch ein- oder mehrstufige Zerfaserung, wobei die letzte Stufe im allgemeinen in einem aerodynamischen Ausziehprozeß besteht. Die Fasern werden dabei in Form einer Faser/Gas-Dispersion erhalten, wobei die Dispersion eine hohe lineare Geschwindigkeit aufweist, die mehr als 100 m/s bis hin zu Schallgeschwindigkeit aufweisen kann. Die Herstellung von Fasermatten erfolgt nun dadurch, daß die Fasern auf einem perforierten Transportband abgelegt werden, wobei unterhalb des Transportbandes das Gas abgesaugt wird. Vor der Ablage auf dem Transportband muß die Geschwindigkeit der Faser/Gas-Dispersion auf die Durchtrittsgeschwindigkeit des Gases durch das Transportband reduziert werden.

Zur Reduktion der Geschwindigkeit der Dispersion sind bereits eine Reihe von Verfahren bekannt geworden.(s.z.B. DE-C-803 925, DE-B-1131 853, US-A-4 060 355, EP-A1 38 989). Nach einer Reihe von Vorschlägen des Standes der Technik wird die Faser/Gas-Dispersion in einen Strömungskanal eingeführt, wobei der Strömungskanal eine relativ große Öffnung aufweist, durch die Umgebungsluft mit eingesaugt wird und der Strömungskanal ferner eine Länge aufweist, die eine Durchmischung der Faser/Gas-Dispersion mit der Umgebungsluft erlaubt, wobei sich die mittlere Geschwindigkeit zwischen Anfangsgeschwindigkeit der Faser/Gas-Dispersion und der eingesaugten Umgebungsluft einstellt.

Nach anderen Vorschlägen besteht der Strömungskanal aus einem Diffusor, in den zusätzlich in verschiedenen Stufen in Strömungsrichtung Umgebungsluft eingesaugt wird.

Andere Verfahren beruhen darauf, daß die Faser/Gas-Dispersion hoher Geschwindigkeit einfach in den Raum entlassen wird, wobei die Dispersion unter Vermischung mit der Raumluft abgebremst wird. Gegebenenfalls kann dabei ein Unterschalldiffusor vorgeschaltet sein.

Diese bekannten Verfahren, die eine Verdünnung der Dispersion mit ruhendem Gas zur Geschwindigkeitsreduktion verlangen, haben den Nachteil, daß die unter dem Transportband abzusaugende Gasmenge erheblich vergrößert wird. Dieses vergrößerte Gasvolumen kann nicht einfach in die Atmosphäre entlassen werden sondern muß aufbereitet werden, da es im allgemeinen Bindemitteltröpfchen und feinteilige Stäube aus der Faserherstellung enthält. Die Pumpenleistung zur Förderung dieses vergrößerten Gasvolumens durch Filter und Wäscher belastet das Verfahren ungünstig.

Die Herstellung von Fasermatten geringer Raumdichte verlangt auch, daß bereits bei der Faserablage Erzeugung möglichst geringe Rohdichten erzeugt werden. Die Notwendigkeit, große Gasvolumina durch das Transportband und die bereits gebildete Fasermatte abzusaugen, bedingt auch, daß der Druckabfall durch die Rohmatte entsprechend groß ist und die Erzeugung geringer Rohdichten behindert.

Aufgabe der vorliegenden Erfindung ist es nun, die Geschwindigkeit von Faser/Gas-Dispersionen ohne Verdünnung der Dispersion zu reduzieren. Dies erfolgt erfindungsgemäß nur in Unterschalldiffusoren. Die Wirkungsweise von Unterschalldiffusoren ist im Prinzip bekannt. Das Verhältnis von Eintritts- und Austrittsdichtegeschwindigkeit ist durch das Verhältnis von Eintrittsquerschnitt zu Austrittsquerschnitt gegeben. Dabei nimmt die Diffusorwand den Impulsdifferenz des strömenden Mediums auf. Die Geschwindigkeitsreduktion in der Nähe der Diffusorwand ist daher erheblich stärker als in der Achse des Diffusors. Es stellt sich daher ein Geschwindigkeitsprofil ein. Bei größeren Verhältnissen von Austrittsquerschnitt zu Eintrittsquerschnitt des Diffusors besteht dann keine hinreichende Wechselwirkung zwischen der Strömung in der Diffusorachse und der Strömung in der Nähe der Diffusorwand. Es kommt daher zu Rückströmungen zwischen Diffusorwand und Diffusorachse. Dies läßt sich im Prinzip dadurch verhindern, daß die Aufenthaltszeit des strömenden Mediums im Diffusor so verlängert wird, daß noch ein hinreichender Geschwindigkeitsausgleich über den Diffusorquerschnitt stattfindet. Eine solche Verlängerung der Aufenthaltszeit wird durch eine Verlängerung des Diffusors in Achsenrichtung, d.h. durch einen sehr geringen Öffnungswinkel des Diffusors, erreicht. Bei hohen Dichtegeschwindigkeitsverhältnissen von z.B. = 30 ergeben sich dabei Diffusorlängen in Achsenrichtung von 10 m oder mehr, die technisch kaum zu verwirklichen sind.

Es wurde nun gefunden, daß bei Einsatz einer Vielzahl kleiner Diffusoren trotz Verkürzung der Aufenthaltszeit des strömenden Mediums im Diffusor hohe Dichtegeschwindigkeitsverhältnisse beherrscht werden können, ohne daß Rückströmungen auftreten.

Gegenstand der vorliegenden Erfindung ist daher ein Verfahren zur Reduktion der Geschwindigkeit eines strömenden Mediums im Unterschalldiffusor, das dadurch gekennzeichnet ist, daß der Massenstrom $\dot{M}$ durch den Diffusor so gewählt wird, daß das Produkt $\dot{M}\ \rho_1 V_1/\rho_2 V_2$ kleiner als 10 kg/s ist, wobei $\rho_1 V_1$ die mittlere Dichtegeschwindigkeit am Diffusoreingang und $\rho_2 V_2$ die mittlere Dichtegeschwindigkeit am Diffusorausgang bezeichnen.

Dichtegeschwindigkeit bezeichnet das Produkt aus Dichte $\rho$ und Geschwindigkeit V der Dispersion.

Vorzugsweise soll das Produkt M $\rho_1 V_1/\rho_2 V_2$ kleiner als 8,5 kg/s, besonders bevorzugt zwischen 5 und 8 kg/s betragen.

Als Diffusoren werden bevorzugt Strömungskanäle mit einem Erweiterungswinkel zwischen 3,5 und 7° eingesetzt.

Die Strömungskanäle sollen vorzugsweise einen ovalen Querschnitt aufweisen, wobei das Verhältnis zwischen dem größten Durchmesser und dem kleinsten Durchmesser kleiner als 2 ist. Besonders bevorzugt werden Strömungskanäle mit kreisrundem Querschnitt eingesetzt. Bei Abweichung vom kreisförmigen Querschnitt soll der Querschnitt vorzugsweise elliptisch ausgebildet sein.

Mit dem erfindungsgemäßen Verfahren gelingt es, Dichtegeschwindigkeitsverhältnisse zwischen Diffusoreingang und -ausgang von mehr als 30 zu beherrschen. Vorzugsweise soll das Dichtegeschwindigkeitsverhältnis zwischen 50 und 200 liegen.

Die Dichtegeschwindigkeiten von Faser/Gas-Dispersionen, die bei der Herstellung von Mineralwolle an der Faserbildungsvorrichtung entstehen, können oberhalb von 100 kg/sec. $m^2$ liegen. Bevorzugt betragen die erfindungsgemäß eingesetzte Anfangsdichtegeschwindigkeiten am Eingang des Diffusors 150 - 300 kg/s. $m^2$, besonders bevorzugt oberhalb 200 kg/s. $m^2$.

Die Austritts - Dichtegeschwindigkeiten sollen erfindungsgemäß bevorzugt unterhalb von 6 kg/s. $m^2$ liegen. Besonders bevorzugte Austrittsdichtegeschwindigkeiten liegen zwischen 1 und 4 kg/s. $m^2$.

Bei technischen Zerfaserungsverfahren, z.B. dem Düsenblasverfahren, fällt an einer Faserbildungseinheit ein Massenstrom der Faser/Luft-Dispersion an, der den erfindungsgemäß einem Diffusor zuzuführenden Massenstrom um ein vielfaches übertrifft. Erfindungsgemäß wird daher die Faser/Gas-Dispersion entsprechend ihrer Anfangsdichtegeschwindigkeit $\rho_1 V_1$ und der gewünschten Enddichtegeschwindigkeit $\rho_2 V_2$ in einzelne Masseströme M entsprechend M $\rho_1 V_1/\rho_2 V_2$ kleiner als 10 kg pro Sekunde aufgeteilt und jeder Massenstrom getrennt einem Diffusor zugeführt. Besonders bevorzugt wird bereits die Faserbildungseinheit, z.B. die Ziehdüse beim Düsenblasverfahren in Segmente aufgeteilt, wobei jedes Segment einen Massenstrom $\dot{M}$ der Faser/Gas-Dispersion erzeugt, der den erfindungsgemäß geforderten Bedingungen gehorcht.

Obwohl das erfindungsgemäße Verfahren speziell für die Herstellung von Fasermatten entwickelt wurde, kann es vvorteilhaft überall da Verwendung finden, wo Dispersionen feiner Tröpfchen oder feinteiliger Festkörper in Gas mit hoher linearer Geschwindigkeit anfallen und eine Geschwindigkeitsreduktion ohne Verdünnung der Dispersion gewünscht wird. Ein besonderer Vorteil des erfindungsgemäßen Verfahrens besteht ferner darin, daß die Dispersion im gasförmigen Medium am Austritt des Unterschalldiffusors mit im wesentlichen laminarer Strömung und im wesentlichen turbulenzfrei bei relativ geringer Abweichung von der mittleren Geschwindigkeit anfällt.

Die erfindungsgemäß erhaltene Dispersion feiner Teilchen in Gas weist daher hervorragende Eigenschaften Weiterverarbeitungsschritte wie Filtration, Schwerkraftsichtung oder Magnetscheidung auf. Z.B. können aerodynamisch zerfaserte Metallschmelzen, bei denen Metallpulver in Gas mit hoher Geschwindigkeit dispergiert anfallen, nach der erfindungsgemäßen Reduktion der Geschwindigkeit besonders vorteilhaft der Abtrennung besonders großer oder besonders feiner Pulverteilchen unterzogen werden.

Gegenstand der vorliegenden Erfindung ist auch eine Vorrichtung bestehend aus einer Vielzahl von Erzeugungseinrichtungen für Dispersionen aus feinen Teilchen und Gas mit linearen Dichtegeschwindigkeiten von oberhalb 150 kg/s. $m^2$ und einer Vielzahl von Unterschalldiffusoren, wobei jeder Erzeugungseinrichtung ein Unterschalldiffusor nachgeschaltet ist, dadurch gekennzeichnet, daß die Unterschalldiffusoren einen Quotienten von Austrittsquerschnittsfläche zu Eintrittsquerschnittsfläche von größer als 30 aufweisen, und wobei das Produkt aus an jeder Erzeugungseinrichtung erzeugtem Massenstrom $\dot{M}$ der Dispersion und dem Quotienten aus Austrittsquerschnittsfläche und Eintrittsquerschnittsfläche des Diffusors kleiner als 10 kg/s ist.

Das Verhältnis von Austritts- zu Eintrittsquerschnitt des Diffusors soll oberhalb von 30, vorzugsweise oberhalb von 50 liegen. In extremen Fällen kann das Verhältnis von Austritts- zu Eintrittsquerschnitt des Diffusors Werte von 200 erreichen.

Die vorliegende Erfindung wird nachfolgend anhand der anliegenden Figuren näher erläutert.

Fig. 1 zeigt eine Anordnung zur Durchführung des erfindungsgemäßen Verfahren beim Düsenblasverfahren zur Herstellung von Mineralwolle.

Fig. 2 zeigt einen vertikalen Querschnitt durch die Anordnung nach Fig. 1.

Fig. 3 stellt die relative Anordnung der Diffusoraustrittsquerschnitte zu den Ausgängen der Fasererzeugungseinrichtungen dar.

Fig. 4 zeigt ein Detail aus Fig. 2 in vergrößerter Darstellung.

Fig. 5 zeigt eine beispielhaft einzusetzende Fasererzeugungseinheit.

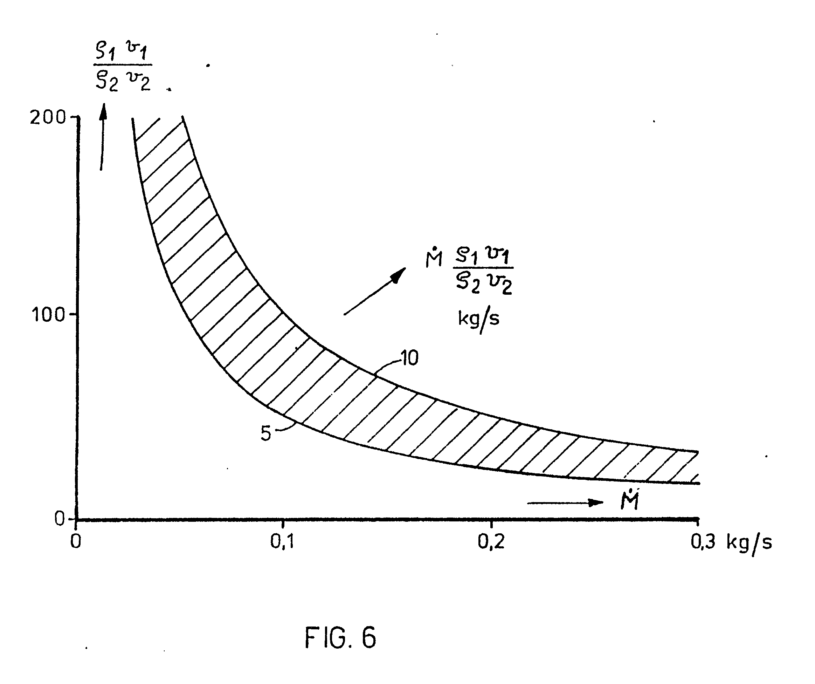

Fig. 6 zeigt als Diagramm den Zusammenhang zwischen dem einem Diffusor zuzuführenden Massenstrom in Abhängigkeit von dem Verhältnis der Eintritts- und Austrittsdichtegeschwindigkeiten.

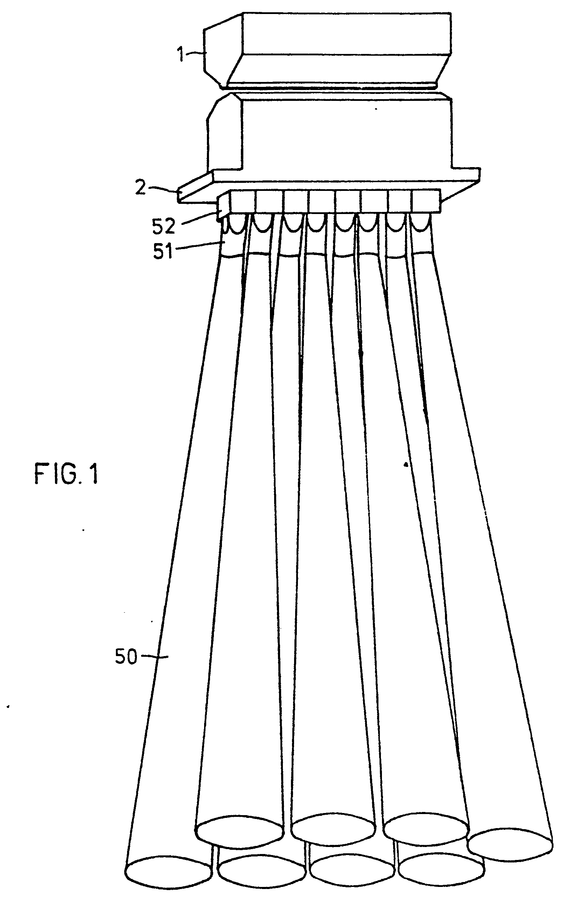

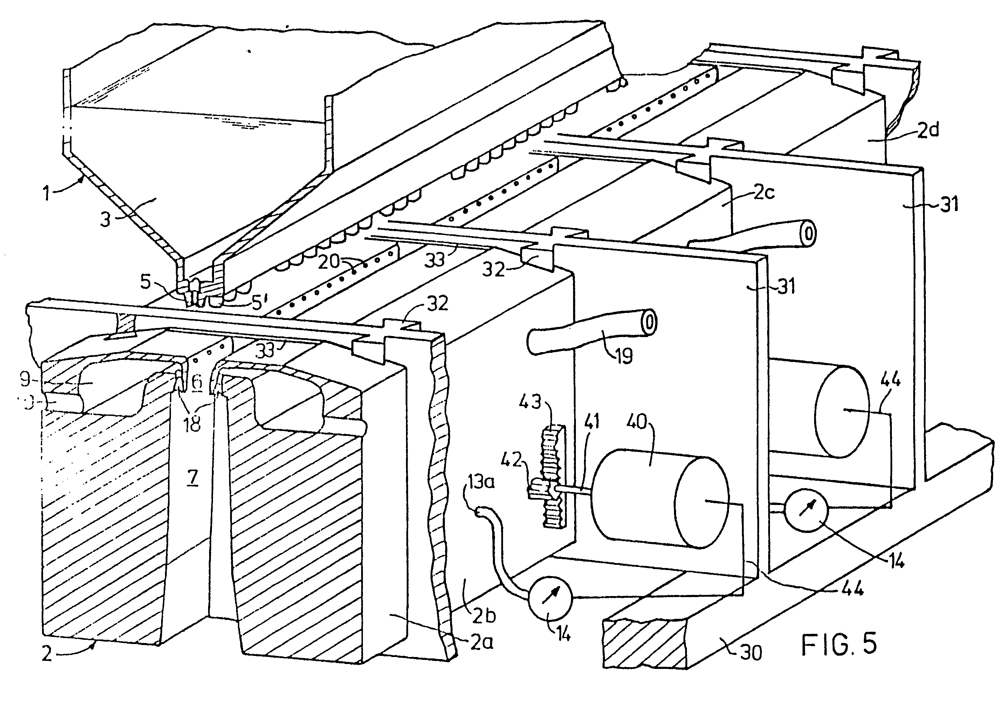

Die Übersichtsdarstellung der Fig. 1 zeigt einen Schmelzetiegel 1, aus dem an der Unterkante eine Vielzahl von Schmelzeströmen austreten, die in die nach dem Düsenblasverfahren arbeitende Ziehdüse 2 eintreten. Schmelzetiegel 1 und Ziehdüse 2 werden anhand der Fig.5 noch näher erläutert. Unterhalb der Ziehdüse 2 sind beispielhaft 8 Diffusoren 50 angeordnet. Die Diffusoren sind über Befestigungsteile 52 mit der Ziehdüse verbunden und weisen ferner Übergangsteile 51 auf, in denen der Übergang vom rechtwinkigen Ziehdüsenausgang zum kreisrunden Querschnitt des Diffusoreingangs erfolgt.

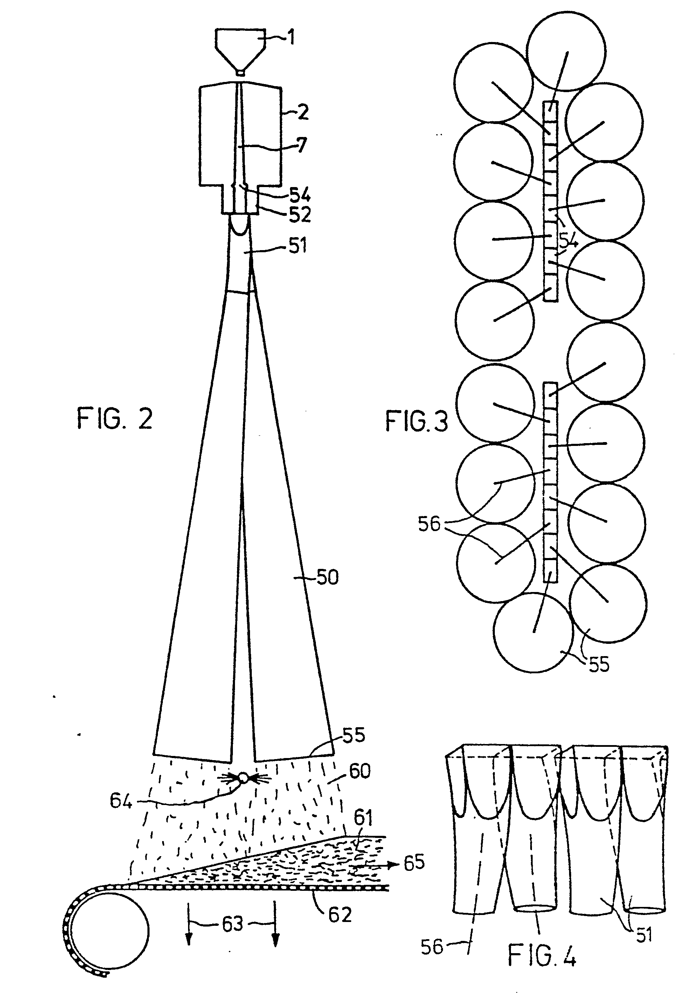

In Fig. 2 ist schematisch der Schmelztiegel 1 angedeutet und darunter die Ziehdüse 2 in der sich der noch zu erläuternde Ausziehteil 7 der Ziehdüse befindet. Der Austrittsquerschnitt der Ziehdüse 2 ist mir 54 bezeichnet. Unterhalb des Ausziehteils befindet sich das Befestigungsteil 52, mit dem der Diffusor 50 an der Ziehdüse 2 befestigt ist. Zwischen dem Austrittsquerschnitt 54 der Ziehdüse 2 kann eine Gummimanschette vorgesehen sein, die das Eindringen von Gas verhindert. Aus dem Austrittsquerschnitt 55 der Diffusoren 50 tritt die Faserdispersion 60 mit geringer Geschwindigkeit aus. Zwischen den Diffusoren 50 können am Austrittsende Sprühdüsen 64 für das Bindemittel vorgesehen werden. Unterhalb der Diffusoren 50 befindet sich das perforierte Transportband 62, auf dem die Fasern zur Bildung der Matte 61 unter Absaugung der Luft entsprechen den Pfeilen 63 abgelegt werden. Das Transportband bewegt sich in Richtung des Pfeiles 65. Fig. 3 erläutert die relative Anordnung der Austrittsquerschnitte 55 der Diffusoren zur Anordnung der Austrittsquerschnitte 54 der Ziehdüse. Es sind zwei Faserbildungseinrichtungen dargestellt, die in Segmente aufteilt sind, wobei jede der Faserbildungseinrichtungen 8 Segmente mit je einem Austrittsquerschnitt 54 aufweist. Ferner ist die Achse 56 des Diffusors eingezeichnet. Wie bereits aus Fig. 2 erkennbar war, ist die Diffusorachse gegen die Mittelebene der Ziehdüse 2 geschwenkt. Die Schwenkung der Achse 56 erfolgt durch die in Fig. 4 vergrößert dargestellten Übergangsstücke 51. Die Krümmung der Achse 56 der Übergangsstücke 51 soll einen möglichst großen Radius aufweisen, um keine Fliehkraftseparation der Fasern aus der Faser/Gas-Dispersion zu bewirken. Vorzugsweise weist die Achse 56 der Übergangsstücke 51 einen Krümmungsradius von ca. 1 m auf. Bei einem Divergenzwinkel des Diffusors von 7° kann die Schwenkung zwischen 5 und 7° betragen.

Ferner ist die Gestaltung des Übergangs von rechteckigem Querschnitt am Eingang des Übergangsstücks 51 auf runden Ausgangsquerschnitt dargestellt.

Fig. 5 zeigt eine Faserbildungseinrichtung nach dem Düsenblasverfahren. Ein Schmelzetiegel 1 enthält die Mineralschmelze 3. Unterhalb des Schmelzetiegels sind Schmelzaustrittsöffnungen 5 und 5' in auf Lücke versetzter Doppelreihe angeordnet. Unterhalb des Schmelzetiegels 1 befindet sich die Ziehdüse 2, die aus Ziehdüsensegmenten 2a, 2b, 2c und 2d besteht. Die Ziehdüsensegmente sind auf einem Träger 30 angeordnet, der eine Vielzahl von vertikal hierauf befestigten Trägerplatten 31 trägt. Die Ziehdüsensegmente 2a bis 2d sind über Schwalbenschwanzführungen 32 einzeln · höhen justierbar, um den Abstand zwischen der Ziehdüsenoberkante und den Schmelzeausflußöffnungen 5, 5' einzustellen. Zur Justierung sind Antriebsmotoren 40, die über eine Achse 41 und ein Zahnrad 42 auf die mit den Ziehdüsensegmenten verbundene Zahnstange 43 wirken, vorgesehen. Die einzelnen Ziehdüsensegmente sind durch Abschlußbleche 33 gasdicht gegen die Trägerplatten 31 abgeschottet.

Die Ziehdüse selbst besteht aus dem Einlaufteil 6, dem Ausziehteil 7 sowie Treibstrahldüsen 18 mit Treibgaszufuhrleitungen 9. Jedem Segment wird über die Zufuhrleitung 19 das Treibgas getrennt zugeführt. Am unteren Ende des Ausziehteils 7 befindet sich jeweils eine Bohrung durch die Ziehdüse senkrecht zur Ziehdüsenmittelebene. Die Bohrung erlaubt über eine Verbindungsleitung 13a und Druckmeßgerät 14 die Messung des Gasdrucks im Ausziehteil 7. Bei Abweichungen des Gasdrucks im Ausziehteil 7 von einem Sollwert kann über Leitung 44 der Motor 40 zur Höhenjustierung jedes Düsensegmentes 2a bis 2d getrennt gesteuert werden. Ferner sind Querstrahldüsen 20 vorgesehen, die ebenfalls aus den Treibgaszufuhrleitungen 9 gespeist werden.

Die Querstrahldüsen 20, die jeweils zwischen zwei aus Schmelzeaustrittsöffnungen 5 der benachbarten Reihe austretende Schmelzeströme gerichtet sind, bewirken eine Erhöhung des Druckgefälles im Ziehdüseneinlauf 6. Eine weitergehende Beschreibung findet sich in EP-Al 119 426. Unterhalb der Ziehdüse 2 wird an jedem Ziehdüsensegment 2a, 2b, 2c usw. ein Unterschalldiffusor 50 mittels Befestigungselement 52 angeflanscht.

**Beispiel**

a) Fasererzeugungseinrichtung

Es wird eine Ziehdüse entsprechend Fig. 5 mit folgenden Abmessungen eingesetzt:
Engste Breite im Ziehdüseneinlauf d = 4 mm,
Durchmesser der Treibstrahldüsen 1 mm,
Durchmesser am Ausgang der Treibstrahldüsen 1,5 mm,
Breite am Anfang des Ausziehteils 8 mm,
Länge des Ausziehteils 80 mm,
Länge des Ziehdüseneinlaufs in Achsenrichtung 3 mm,
Durchmesser der Schmelzeausflußöffnungen des Tiegels 1 mm,
Anzahl der Düsennippel, die in ein Ziehdüsensegment münden: 26 in Doppelreihe,
Anzahl der Segmente: 8
Querschnittsfläche am Ausgang jedes Segmentes: 50 x 10,5 $mm^2$

Die Verfahrensparameter waren folgende:

Luftdruck in der Treibgaszufuhrleitung 9 = 9,6 bar, Gasdruck 20 mm oberhalb desAusziehendes der Ziehdüse 0,35 bar, je Düsennippel austretende Schmelzemenge: 14,6 g/min, Schmelzetemperatur im Schmelzetiegel: 1400°C. Gasgeschwindigkeit am Ausgang der Ziehdüse: 288 m/s Gasdruck am Ausgang der Ziehdüse 0,74 bar, Temperatur des Gases am Ausgang der Ziehdüse. 120°C.

Es wurden C-Glas-Fasern mit einem mittleren Durchmesser von 2,8 μ erhalten. Der Dickstellenanteil oberhalb von 150 μ betrug 2,6 Gew.-%.

b) Geschwindigkeitsreduktion

Die Diffusoren bestehen aus einem Übergangsstück 51 mit Eintrittsquerschnitt 50 x 10,5 $mm^2$ und einem kreisrunden Ausgangsquerschnitt mit einem Radius von 2,6 cm auf. Danach erweitert sich der Diffusor über eine Länge von 1,45 m auf einen ebenfalls kreisrunden Ausgangsquerschnitt von 10 cm Radius.

Die aus den Diffusoren austretende Faser/Gas-Dispersion hat eine mittlere Geschwindigkeit von 5,2 m/s und eine Temperatur von 110° C.

c) Mattenbildung

Nach dem Austritt aus den Diffusoren werden die Fasern in der Dispersion mit einer 15 %igen wäßrigen Lösung eines Phenolformalhyd-Bindemittels besprüht. Die Bindemittelmenge betrug ca. 1 Gew.-% bezogen auf das Gewicht der Fasern.

Die Fasern wurden auf einem perforierten Transportband von 1 m Breite abgelegt, wobei unter dem Transportband auf einer Länge 60 cm (Absaugfläche 0,6 $m^2$) 1,5 kg/s Luft abgesaugt wurde.

Die Matte hatte eine Rohdichte von 2,6 $kg/m^3$. Nach Kompression der Matte und Aushärtung des Bindemittels in einem üblichen Härtungsofen hatte die Matte eine Dichte von 6 $kg/m^3$.

**Patentansprüche**

1. Verfahren zur Reduktion der Geschwindigkeit von Dispersionen (60) feiner Teilchen in Gas im Unterschalldiffusor, dadurch gekennzeichnet, daß der Massenstrom $\dot{M}$ durch den Diffusor(50) so gewählt wird, daß das Produkt M $\rho_1 V_1/\rho_2 V_2$ kleiner als 10 kg/sec. ist, wobei $\rho_1 V_1$ die mittlere Dichtegeschwindigkeit am Diffusoreingang und $\rho_2 V_2$ die mittlere Dichtegeschwindigkeit am Diffusorausgang (55) bezeichnen.

2. Verfahren nach Anspruch 1, dadurch gekennzeichnet, daß die Dispersion (60) aus feinen Teilchen und Gas entsprechend ihrer Anfangsdichtegeschwindigkeit $\rho_1 V_1$ und der gewünschten Enddichtegeschwindigkeit $\rho_2 V_2$ in einzelne Massenströme entsprechend M $\rho_1 V_1/\rho_2 V_2$ kleiner als 10 kg/sec. aufgeteilt wird und jeder Massenstrom getrennt einem Diffusor(50) zugeführt wird, dessen Austritts zu Eintrittsquerschnittsflächen sich wie $\rho_1 V_1$ zu $\rho_2 V_2$ verhalten.

3. Verfahren nach einem der Ansprüche 1 oder 2, dadurch gekennzeichnet, daß das Verhältnis M $\rho_1 V_1/\rho_2 V_2$ kleiner als 8,5 kg/s., vorzugsweise zwischen 5 und 8 kg/s. gewählt wird.

4. Verfahren nach einem der Ansprüche 1 bis 3, dadurch gekennzeichnet, daß Diffusoren (50) mit einem Erweiterungswinkel von 3,5 - 7° eingesetzt werden.

5. Verfahren nach einem der Ansprüche 1 bis 4, dadurch gekennzeichnet, daß Diffusoren (50) mit ovaler, vorzugsweise elliptischer querschnittsfläche mit einem Achsenverhältnis von 1 bis 2, besonders bevorzugt kreisrunder Querschnittsfläche, eingesetzt werden.

6. Verfahren nach einem der Ansprüche 1 bis 5, dadurch gekennzeichnet, daß das Verhältnis der Dichtegeschwindigkeiten am Diffusoreingang und -ausgang größer als 30 ist, vorzugsweise zwischen 50 und 200 liegt.

7. Verfahren nach einem der Ansprüche 1 bis 6, dadurch gekennzeichnet, daß als Dispersion eine an einer Faserbildungseinrichtung (2) entstehende Mineralfaser/ Gas-Dispersion (60) eingesetzt wird.

8. Verfahren nach Anspruch 7, dadurch gekennzeichnet, daß als Faserbildungseinrichtung eine nach dem Düsenblasverfahren arbeitende schlitzförmige Ziehdüse (2) eingesetzt wird, wobei die Ziehdüse (2) in einzelne Segmente (2a, 2b, 2c, 2d) aufgeteilt ist, und jedes Ziehdüsensegment (2a, 2b, 2c, 2d) einen Massenstrom der Faser/Gas-Dispersion liefert, der der Bedingung $\dot{M}$ $\rho_1 V_1/\rho_2 V_2$ kleiner als 10 kg pro Sekunde gehorcht.

9. Verfahren nach einem der Ansprüche 1 bis 8, dadurch gekennzeichnet, daß die Austrittsdichtegeschwindigkeit $\rho_2 V_2$ aus dem Diffusor (50) kleiner als 5 kg/s $m^2$ beträgt.

10. Vorrichtung bestehend aus einer Vielzahl von Erzeugungseinrichtungen für Dispersionen (60) aus feinen Teilchen und Gas mit linearen Dichtegeschwindigkeiten von oberhalb 150 kg/s. $m^2$ und einer Vielzahl von Unterschalldiffusoren (50), wobei jeder Erzeugungseinrichtung ein Unterschalldiffusor nachgeschaltet ist, dadurch gekennzeichnet, daß die Unterschalldiffusoren (50) einen Quotienten von Austrittsquerschnittsfläche zu Eintrittsquerschnittsfläche von größer als 30 aufweisen, und wobei das Produkt aus an jeder Erzeugungseinrichtung erzeugtem Massenstrom $\dot{M}$ der Dispersion und dem Quotienten aus Austrittsquerschnittsfläche und Eintrittsquerschnittsfläche des Diffusors kleiner als 10 kg/s ist.

**Claims**

1. Process for reducing the velocity of dispersions (60) of fine particles in gas in a subsonic diffuser, characterised in that the mass flow $\dot{M}$ through the diffuser (50) is selected such that the product $\dot{M}$ $\rho_1 V_1/\rho_2 V_2$ is less than 10 kg/sec, $\rho_1 V_1$ denoting the average density velocity at the diffuser inlet and $\rho_2 V_2$ the average density velocity at the diffuser outlet (55).

2. Process according to Claim 1, characterised in that the dispersion (60), consisting of fine particles and gas, is divided, according to its initial density velocity $\rho_1 V_1$ and the desired end density velocity $\rho_2 V_2$, into individual mass flows, in accordance with M $\rho_1 V_1/\rho_2 V_2$ being less than 10 kg/sec, and each mass flow is introduced separately into one diffuser (50), the ratio of the outlet to the inlet crosssectional areas thereof being $\rho_1 V_1$ to $\rho_2 V_2$.

3. Process according to one of Claims 1 or 2, characterised in that the ratio $\dot{M}$ $\rho_1 V_1/\rho_2 V_2$ is selected to be less than 8.5 kg/s, preferably between 5 and 8 kg/s.

4. Process according to one of Claims 1 to 3, characterised in that diffusers (50) with a widening angle of 3.5 - 7° are used.

5. Process according to one of Claims 1 to 4, characterised in that diffusors (50) with an oval, preferably elliptical cross-sectional area with an axial ratio of 1 to 2, and particularly preferably a circular cross-sectional area, are used.

6. Process according to one of Claims 1 to 5, characterised in that the ratio of the density velocities at the diffuser inlet and outlet is greater than 30, preferably between 50 and 200.

7. Process according to one of Claims 1 to 5, characterised in that the dispersion used is a mineral fibre/gas dispersion (60) produced on a fibre-forming apparatus (2).

8. Process according to Claim 7, characterised in that the fibre-forming apparatus used is a slit-shaped drawing nozzle (2) operating according to the nozzle blasting process, the drawing nozzle (2) being divided into individual segments (2a, 2b, 2c, 2d), and each drawing nozzle segment (2a, 2b, 2c, 2d) produces a mass flow of the fibre/gas dispersion which meets the requirement of $\dot{M}\ \rho_1 V_1/\rho_2 V_2$ being smaller than 10 kg per second.

9. Process according to one of Claims 1 to 8, characterised in that the outlet density velocity $\rho_2 V_2$ from the diffuser (50) is smaller than 5 kg/s $m^2$.

10. Apparatus consisting of a plurality of production apparatuses for dispersions (60) consisting of fine particles and gas having linear density velocities of more than 150 kg/s. $m^2$ and a plurality of subsonic diffusers (50), each production apparatus having one subsonic diffuser connected downstream thereof, characterised in that the subsonic diffusers (50) have a quotient of outlet cross-sectional area to inlet cross-sectional area of greater than 30, the product of the mass flow $\dot{M}$ of the dispersion produced at each production apparatus and the quotient of the outlet cross-sectional area and inlet cross-sectional area of the diffuser being less than 10 kg/s.

## Revendications

1. Procédé pour réduire la vitesse des dispersions (60) de fines particules dans le gaz dans le diffuseur subsonique, caractérisé en ce que l'on choisit le dèbit massique $\dot{M}$ à travers le diffuseur (50) de façon que le produit $\dot{M}\ \rho_1 V_1/\rho_2 V_2$ soit inférieur à 10 kg/s., étant précisé que $\rho_1 V_1$ désigne le produit densité.vitesse moyen à l'entrée du diffuseur et $\rho_2 V_2$ le produit densité.vitesse moyen à la sortie du diffuseur (55).

2. Procédé selon la revendication 1, caractérisé en ce qu'en fonction de son produit densité.vitesse initial $\rho_1 V_1$ et du produit densité.vitesse final désiré, on répartit la dispersion (60) constituée de fines particules et de gaz de façon à avoir $\dot{M}\ \rho_1 V_1/\rho_2 V_2$ inférieur à 10 kg/s.; et en ce que l'on amène séparément chaque débit massique à un diffuseur (50) dont le rapport de la surface de section de sortie à la surface de section d'entrée est égal au rapport de $\rho_1 V_1$ à $\rho_2 V_2$.

3. Procédé selon l'une des revendications 1 ou 2, caractérisé en cé que l'on choisit le rapport $M\ \rho_1 V_1/\rho_2 V_2$ inférieur à 8,5 kg/s., de préférence entre 5 et 8 kg/s.

4. Procédé selon l'une des revendications 1 à 3, caractérisé en ce que l'on utilise des diffuseurs (50) d'un angle de divergence de 3,5 - 7°.

5. Procédé selon l'une des revendications 1 à 4, caractérisé en ce que l'on utilise des diffuseurs (50) de section ovale, de préférence elliptique, avec un rapport des axes de 1 à 2, et de préférence en particulier de section circulaire.

6. Procédé selon l'une des revendications 1 à 5, caractérisé en ce que le rapport du produit densité.vitesse à l'entrée du diffuseur et de ce même produit à la sorite du diffuseur est supérieur à 30, de préférence entre 50 et 200.

7. Procédé selon l'une des revendications 1 à 5, caractérisé en ce que l'on utilise comme dispersion une dispersion fibres minérales/gaz (60) qui apparait dans un dispositif de formation de fibres (2).

8. Procédé selon la revendication 7, caractérisé en ce que comme dispositif de formation de fibres on utilise une buse d'étirage (2) en forme de fente travaillant selon le procédé de soufflage de la buse, étant précisé que la buse d'étirage (2) se subdivise en différents segments (2a, 2b, 2c, 2d), et que chaque segment de buse d'étirage (2a, 2b, 2c, 2d) donne un débit massique de la dispersion fibres/gaz qui respecte la condition $\dot{M}\ \rho_1 V_1/\rho_2 V_2$ inférieur à 10 kg par seconde.

9. Procédé selon l'une des revendications 1 à 8, caractérisé en ce que le produit densité.vitesse $\rho_2 V_2$ de sortie du diffuseur (50) est inférieur à 5 kg.s $m^2$.

10. Installation constituée d'un grand nombre de dispositifs de production de dispersions (60) de fines particules et de gaz présentant un produit densité.vitesse linéaire supérieur à 150 kg/s. $m^2$ et d'un grand nombre de diffuseurs subsoniques (50), étant précisé qu'un diffuseur subsonique est monté en aval de chaque dispositif de production, caractérisée en ce que les diffuseurs subsoniques (50) présentent un quotient de la surface de section de sortie par la surface de section d'entrée supérieur à 30; et en ce que le produit du débit massique $\dot{M}$, obtenu à chaque dispositif de production, de la dispersion et du quotient de la surface de section de sortie du diffuseur par la surface de section d'entrée du diffuseur est inférieur à 10 kg/s.

1
2
52
51
50

FIG. 1

1
2
7
54
52
51
50
55
60
64
61
65
62
63
54
56
55
56
51

FIG. 2

FIG. 3

FIG. 4

2d
31
31
44
44
14
14
2c
30
40
19
41
43
42
32
32
33
13a
2b
2a
20
33'
5'
6
18
7
5
3
1
9
2
FIG. 5

$\frac{\rho_1 v_1}{\rho_2 v_2}$
200
100
0
0
0,1
0,2
0,3 kg/s
$\dot{M}$
$\dot{M} \frac{\rho_1 v_1}{\rho_2 v_2}$ kg/s
10
5


FIG. 6